# EUROPEAN PATENT APPLICATION

(11) **EP 4 712 293 A1**
(43) Date of publication of application: **18.03.2026**
(21) Application number: 25200768.7
(22) Date of filing: 08.09.2025
(51) Int. Cl.: H02J 3/46, H01M 8/04858, H01M 8/04537, H02J 3/38

(54) **OPERATION MANAGEMENT DEVICE**

(30) Priority: 11.09.2024 JP 2024157830
(71) Applicant: Yanmar Holdings Co., Ltd., Osaka-shi, Osaka (JP)
(72) Inventor: DEGUCHI, Kazuhiro, Osaka (JP); TOGASHI, Taichi, Osaka (JP); HORII, Shimpei, Osaka (JP)
(74) Representative: Sekiguchi, Kazuya

(57) **Abstract**

[Problem] To provide an operation management device capable of ensuring the convenience of a power generation system by causing the power generation system to perform an operation suitable for a request to the power generation system in a predetermined case.

[Solution] An operation management device manages an operation of a power generation system comprising an engine power generator and a fuel cell power generator, and the operation management device comprises a processing portion that operates one of the engine power generator and the fuel cell power generator when a required output of the power generation system is equal to or less than a first predetermined value.

## Description

### TECHNICAL FIELD

The present invention relates to an operation management device.

### BACKGROUND ART

Patent Document 1 discloses a power generation engine operation control device that performs operation control of a plurality of power generation engines (for example, diesel engines). The plurality of power generation engines are included in a power generation system.

### PRIOR ART DOCUMENT

### PATENT DOCUMENT

Patent Document 1: Japanese Unexamined Patent Publication No. 2004-211624

### SUMMARY OF INVENTION

### TECHNICAL PROBLEM

In recent years, a power generation system including an engine power generator and a fuel cell power generator has been desired from the viewpoint of carbon neutrality. The engine power generator and the fuel cell power generator are the same in that they generate electric power using hydrogen gas as fuel, but, for example, the engine power generator has higher maintenance efficiency and lower power generation efficiency than the fuel cell power generator. Therefore, in a predetermined case, the request for the power generation system (prioritizing the maintenance efficiency, prioritizing the power generation efficiency, or the like) may be changed. When the above-described change has occurred and the operation management device that manages the operation of the power generation system cannot operate the power generation system in a manner suitable for the changed request, the power generation system becomes inconvenient.

The present invention has been made to solve the above-described problem, and an object of the present invention is to provide an operation management device capable of ensuring the convenience of a power generation system by causing the power generation system to perform an operation suitable for a request for the power generation system in a predetermined case.

### SOLUTION TO PROBLEM

An operation management device according to one aspect of the present invention is an operation management device that manages an operation of a power generation system comprising an engine power generator and a fuel cell power generator, the operation management device comprising: a processing portion that operates one of the engine power generator and the fuel cell power generator when a required output of the power generation system is equal to or less than a first predetermined value.

An operation management device according to another aspect of the present invention is an operation management device that manages an operation of a power generation system comprising an engine power generator and a fuel cell power generator, the operation management device comprising: a processing portion that operates one of the engine power generator and the fuel cell power generator when a required output of the power generation system is equal to or more than a second predetermined value.

### ADVANTAGEOUS EFFECTS OF INVENTION

According to the above-described configuration, in a predetermined case, it is possible to ensure the convenience of a power generation system by causing the power generation system to perform an operation suitable for a request for the power generation system.

### BRIEF DESCRIPTION OF DRAWINGS

FIG. 1 is a block diagram schematically illustrating a schematic configuration of an operation management device according to an embodiment of the present invention.
FIG. 2 is a flowchart illustrating a flow of operation management of the power generation system by the operation management device.
FIG. 3 is an explanatory diagram for explaining an operation pattern of the power generation system.
FIG. 4 is an explanatory diagram illustrating a modification example of the operation pattern.
FIG. 5 is an explanatory diagram illustrating another modification example of the operation pattern.
FIG. 6 is an explanatory diagram illustrating a modification example of the connection between the operation management device and a power generation company system.

### DESCRIPTION OF EMBODIMENTS

An embodiment of the present invention will be described below with reference to the drawings.

### [1. Schematic Configuration of Operation Management Device]

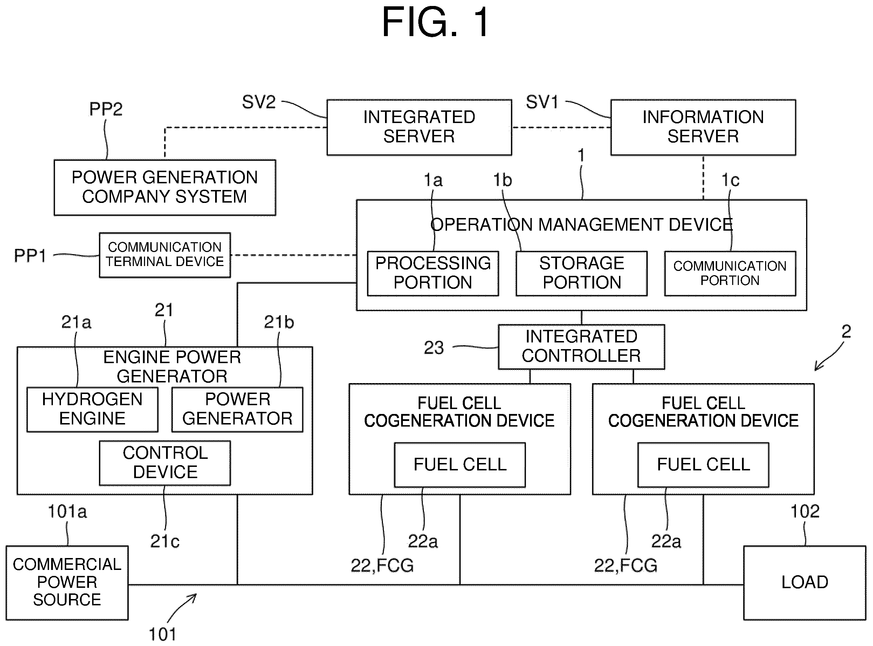

FIG. 1 is a block diagram schematically illustrating a schematic configuration of an operation management device 1 according to an embodiment of the present invention. The operation management device 1 is a computer device placed near a power generation system 2 (specifically, in a site where the power generation system 2 is installed). However, the operation management device 1 is not limited to the above-described configuration, and may be, for example, a server device that can communicate via a communication line such as the Internet.

The operation management device 1 includes a processing portion 1a, a storage portion 1b, and a communication portion 1c. The processing portion 1a is, for example, a processor or a microprocessor. The storage portion 1b is a main storage device such as a read only memory (ROM) or a random access memory (RAM). The storage portion 1b may further include an auxiliary storage device such as a hard disk drive (HDD) or a solid state drive (SSD). The storage portion 1b stores various types of programs, data, and the like. The processing portion 1a reads out the various types of programs from the storage portion 1b and executes arithmetic processing in accordance with the programs. Thus, for example, the processing portion 1a can manage the operation of the power generation system 2 on the basis of the operation pattern. That is, the operation management device 1 can manage the operation of the power generation system 2. The programs stored in the storage portion 1b may be provided by, for example, a computer-readable non-volatile recording medium. As another example, each of the programs may be provided from a program providing server via a communication line such as the Internet.

The communication portion 1c communicates with, for example, a communication terminal device PP1 of a power generation company, an information server SV1 managed by a general power transmission and distribution company, and the like via a communication line such as the Internet. The communication terminal device PP1 includes, for example, a personal computer, a smartphone, and the like. More specifically, the communication portion 1c and the communication line are connected via a wireless router (not illustrated) provided outside the operation management device 1. That is, communication between the communication portion 1c and the communication terminal device PP1 is performed by wireless communication. Communication between the communication portion 1c and the information server SV1 is also performed by wireless communication. The communication between the communication portion 1c and the communication terminal device PP1 or the information server SV1 is not limited to the above-described configuration. For example, the communication between the communication portion 1c and the communication terminal device PP1 or the information server SV1 may be performed by wired communication.

The power generation system 2 is grid-connected to a commercial power system 101. More specifically, the power generation system 2 includes an engine power generator 21 and a plurality of (two in the present embodiment) fuel cell cogeneration devices 22, and the engine power generator 21 and the respective fuel cell cogeneration devices 22 are grid-connected to the commercial power system 101. The number of the engine power generators 21 is one in the present embodiment, but is not limited to one and may be plural (two or more). The number of the fuel cell cogeneration devices 22 is two, but is not limited to two, and may be one or three or more.

The commercial power system 101 includes a commercial power source 101a, and supplies commercial power generated by the commercial power source 101a. A load 102 is connected to the commercial power system 101. The load 102 includes, for example, a household electric appliance, an industrial electric appliance (for manufacturing or facility), and the like. Specifically, a motor, a pump, and the like provided in such a device consume electric power. Therefore, the demand power (power consumption) of the load 102 is covered with the power generated by the power generation system 2 and the commercial power supplied from the commercial power system 101.

The engine power generator 21 has a hydrogen engine 21a and a power generator 21b connected to the hydrogen engine 21a. The hydrogen engine 21a obtains power by injecting hydrogen gas into intake air to generate air-fuel mixture, compressing the air-fuel mixture, and igniting the compressed air-fuel mixture to combust the hydrogen gas. That is, the hydrogen engine 21a of the present embodiment is a hydrogen gas-dedicated engine.

The power output from the hydrogen engine 21a is transmitted to the power generator 21b. This power causes the power generator 21b to generate electric power. The electric power generated by the power generator 21b is supplied to the load 102.

The configuration of the hydrogen engine 21a is not limited to the above, and may be, for example, a hydrogen gas mixed combustion engine in which liquid fuel such as light oil and hydrogen gas are used as fuels. When the hydrogen engine 21a is the above-described hydrogen gas mixed combustion engine, for example, the hydrogen engine 21a obtains power by injecting hydrogen gas into intake air to generate air-fuel mixture, compressing the air-fuel mixture, injecting liquid fuel into the high-temperature air-fuel mixture, and combusting the hydrogen gas.

The hydrogen engine 21a generates heat during power acquisition. More specifically, the amount of heat generation of the hydrogen engine 21a increases as the power to be output increases. Therefore, heat (waste heat) generated in the hydrogen engine 21a may be recovered inside the engine power generator 21 and effectively utilized for, for example, hot-water supply, air-warming, and the like. That is, the engine power generator 21 may include a hydrogen engine cogeneration device capable of recovering waste heat of the hydrogen engine 21a.

The engine power generator 21 further includes a control device 21c. The control device 21c is composed of a computer device and controls the respective portions (including the hydrogen engine 21a and the power generator 21b) of the engine power generator 21. The control device 21c is communicably connected to the operation management device 1. For example, the control device 21c controls the hydrogen engine 21a and the power generator 21b on the basis of an operation instruction output from the operation management device 1.

The engine power generator 21 may include an engine other than the hydrogen engine 21a instead of (or in addition to) the hydrogen engine 21a. For example, the engine power generator 21 may include, instead of the hydrogen engine 21a, a gas engine that uses gaseous fuel other than hydrogen gas (e.g., natural gas) as fuel, a diesel engine, or a gasoline engine.

The fuel cell cogeneration device 22 is an example of a fuel cell power generator FCG. That is, the fuel cell power generator FCG includes the fuel cell cogeneration device 22. Therefore, the power generation system 2 includes a plurality of fuel cell power generators FCG (the fuel cell cogeneration devices 22 in the present embodiment).

In the present embodiment, a case where the fuel cell power generator FCG is referred to as "one of the engine power generator 21 and the fuel cell power generator FCG" and the engine power generator 21 is referred to as "the other of the engine power generator 21 and the fuel cell power generator FCG" will be described. However, the present invention is not limited thereto, and, for example, the engine power generator 21 may be referred to as "one of the engine power generator 21 and the fuel cell power generator FCG", and the fuel cell power generator FCG may be referred to as "the other of the engine power generator 21 and the fuel cell power generator FCG".

Each of the fuel cell cogeneration devices 22 has a fuel cell 22a. The fuel cell 22a (also referred to as a fuel cell stack) generates electric power using the hydrogen gas supplied from the outside of the fuel cell cogeneration device 22 and the oxidant gas. In the present embodiment, air is used as the oxidant gas. However, the oxidant gas is not limited to air, and may be any gas containing oxygen.

The fuel cell 22a is composed of a plurality of stacked cells. Each cell includes a solid polymer electrolyte membrane, an anode, a cathode, and a pair of separators. The solid polymer electrolyte membrane is disposed between the anode and the cathode. The anode is a negative electrode (fuel electrode) and includes an anode catalyst layer and a gas diffusion layer. The cathode is a positive electrode (air electrode) and includes a cathode catalyst layer and a diffusion layer. The anode electrode, the solid polymer electrolyte membrane, and the cathode electrode constitute a membrane electrode assembly (MEA). The membrane electrode assembly is disposed between the pair of separators. Each separator has a plurality of grooves. Each groove of one separator forms a flow path for hydrogen gas. Each groove of the other separator forms a flow path for air.

On the anode side, hydrogen is decomposed into hydrogen ions and electrons by a catalyst. The hydrogen ions pass through the solid polymer electrolyte membrane and move to the cathode side. On the other hand, the electrons move to the cathode side through an external circuit. Consequently, a current is generated (electric power is generated). On the cathode side, oxygen included in air combines with electrons having flowed through the external circuit and hydrogen ions having passed through the solid polymer electrolyte membrane to generate water. The generated water is contained in the exhaust gas and discharged to the outside of the fuel cell cogeneration device 22. The electric power generated by the fuel cell 22a is supplied to the load 102 via a boost converter and an inverter (neither of which is illustrated) provided inside the fuel cell cogeneration device 22.

The fuel cell 22a generates heat during power generation. More specifically, the amount of heat generation of the fuel cell 22a increases as the electric power to be generated increases. The heat (waste heat) generated along with the power generation of the fuel cell 22a is recovered inside the fuel cell cogeneration device 22 and effectively utilized for, for example, hot water supply, air-warming, and the like. That is, the fuel cell cogeneration device 22 can recover waste heat generated along with the power generation of the fuel cell 22a.

From the viewpoint of improving the overall efficiency by utilizing the waste heat generated along with the power generation of the fuel cell 22a, as in the present embodiment, it is desirable that the fuel cell power generator FCG includes the fuel cell cogeneration device 22 that recovers the waste heat generated along with the power generation (of the fuel cell 22a).

The power generation system 2 further includes an integrated controller 23. The integrated controller 23 is composed of a computer device, and controls the operation of each fuel cell cogeneration device 22. The integrated controller 23 is communicably connected to the operation management device 1 and each fuel cell cogeneration device 22. For example, the integrated controller 23 controls the operation of each fuel cell cogeneration device 22 on the basis of an operation instruction output from the operation management device 1. The integrated controller 23 is placed near each fuel cell cogeneration device 22 or near the operation management device 1.

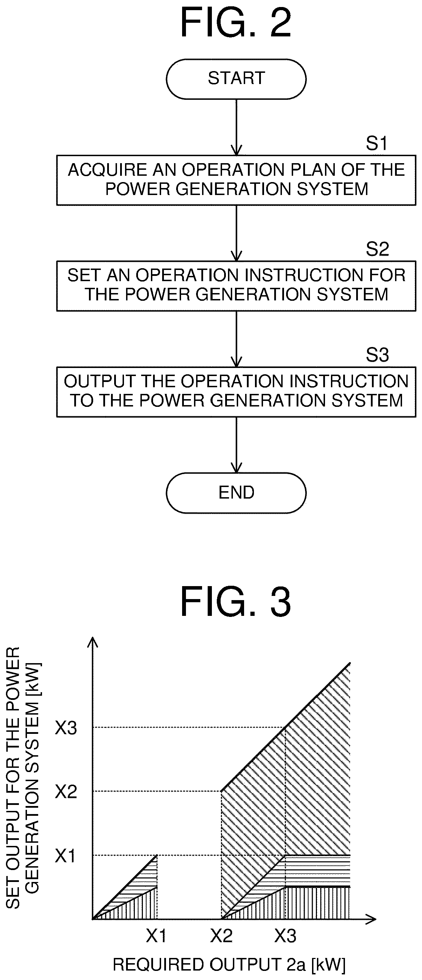

The operation plan (power generation plan) of the power generation system 2 is made by a power generation company of the power generation system 2 and is input to the operation management device 1 via a communication terminal device PP1 of the power generation company. In detail, the power generation company (specifically, the operator of the power generation company) manipulates the communication terminal device PP1 to input the operation plan of the power generation system 2. The input operation plan of the power generation system 2 is output from the communication terminal device PP1 to the operation management device 1. In the present embodiment, the operation plan of the power generation system 2 means a required output 2a (see FIG. 3 and the like) described below for the power generation system 2 every predetermined time interval (for example, every thirty minutes). The operation plan of the power generation system 2 is also input to the power generation company system PP2 by a power generation company (specifically, an operator of the power generation company).

The power generation company system PP2 is composed of, for example, a server device that can communicate via a communication line such as the Internet. The power generation company system PP2 is managed by a power generation company. The power generation company system PP2 is communicably connected to the integrated server SV2 (via a communication line). The integrated server SV2 is communicably connected to the information server SV1 (via a communication line). The power generation company system PP2 may be communicably connected to the information server SV1 (via a communication line).

The information server SV1 is composed of, for example, a server device that can communicate via a communication line such as the Internet. The information server SV1 is managed by the general power transmission and distribution company as described above. The integrated server SV2 is composed of, for example, a server device that can communicate via a communication line such as the Internet. The integrated server SV2 is managed by an electric power wide area operation and promotion organization.

The operation plan (for example, the operation plan of the following day) of the power generation system 2 input to the power generation company system PP2 is output to the integrated server SV2. In addition to the operation plan of the power generation system 2, an operation plan of each power generation means is input to the integrated server SV2 from a power generation company that manages each power generation means (power plant, power generation system, power generation device, and the like). The integrated server SV2 collects these operation plans and outputs the collected operation plans to the information server SV1. The information server SV1 determines whether the suppression of the operation (power generation) is necessary in each power generation means based on the information related to the operation plan output from the integrated server SV2. When the information server SV1 determines that the suppression of the operation is necessary, the information server SV1 outputs a suppression instruction. For example, when the information server SV1 determines that the suppression of the operation of the power generation system 2 is necessary, a suppression instruction is output from the information server SV1 to the operation management device 1.

The operation management device 1 manages the operation of the power generation system 2 on the basis of the operation plan of the power generation system 2 input via the communication terminal device PP1 and (when a suppression instruction is output from the information server SV1) a suppression instruction output from the information server SV1. In the present embodiment, it is assumed that the suppression of the operation of the power generation system 2 is not necessary and a suppression instruction is not output from the information server SV1 to the operation management device 1. However, this assumption is an assumption used merely for the explanation and is not intended to limit the necessity of suppression of actual operation. The operation management of the power generation system 2 by the operation management device 1 will be described below.

### [2. Operation Management of Power Generation System by Operation Management Device]

FIG. 2 is a flowchart illustrating a flow of operation management of the power generation system 2 by the operation management device 1.

In step S1, the processing portion 1a (see FIG. 1) acquires an operation plan of the power generation system 2. In the present embodiment, as described above, the above-described acquisition is realized by the power generation company (specifically, the operator of the power generation company) manipulating the communication terminal device PP1 to input the operation plan of the power generation system 2. When the operation plan of the power generation system 2 is acquired, the processing proceeds to the next step S2.

In step S2, the processing portion 1a sets an operation instruction for the power generation system 2. In the present embodiment, the above-described setting is performed based on an operation pattern set in advance. When the operation instruction for the power generation system 2 is set, the processing proceeds to the next step S3.

In step S3, the processing portion 1a outputs, to the power generation system 2, the operation instruction for the power generation system 2. The operation of the power generation system 2 is performed based on the operation instruction. The operation pattern used to set an operation instruction for the power generation system 2 will be described below with reference to FIG. 3. FIG. 3 is an explanatory diagram illustrating an operation pattern. FIG. 3 illustrates allocation of the set output (power generation output) in the power generation system 2 with respect to the required output 2a for the power generation system 2. In detail, the set output assigned to the one fuel cell cogeneration device 22 with respect to the required output 2a is indicated by a vertical line region. The set output assigned to the other fuel cell cogeneration device 22 with respect to the required output 2a is indicated by a horizontal line region. Further, the set output allocated to the engine power generator 21 with respect to the required output 2a is indicated by a hatched region.

When the required output 2a is equal to or less than the first predetermined value X1, the processing portion 1a (see FIG. 1) outputs an instruction to operate the fuel cell cogeneration device 22 to the integrated controller 23 (see FIG. 1) and outputs an instruction to stop the engine power generator 21 to the control device 21c (see FIG. 1). In detail, the operation instruction for the fuel cell cogeneration devices 22 output from the processing portion 1a to the integrated controller 23 is an instruction to operate each fuel cell cogeneration device 22 such that the outputs of the respective fuel cell cogeneration devices 22 become the same. Specifically, the processing portion 1a sets the output of each fuel cell cogeneration device 22 to a value obtained by dividing the required output 2a by the number of the fuel cell cogeneration devices 22 (two in the present embodiment). That is, the processing portion 1a sets the output of each of the fuel cell power generators FCG (the fuel cell cogeneration devices 22 in the present embodiment) to be uniform.

In the present embodiment, the first predetermined value X1 is set to the same value as the sum of the rated outputs of the respective fuel cell cogeneration devices 22 and is stored in the storage portion 1b (see FIG. 1). However, the setting of the first predetermined value X1 is not limited to the above.

When the outputs of the plurality of fuel cell cogeneration devices 22 are set to be uniform, the progress of deterioration in the plurality of fuel cell cogeneration devices 22 is less likely to vary. Thus, the timing of the maintenance work in the plurality of fuel cell cogeneration devices 22 is prevented from being dispersed, and the efficiency of the maintenance work is prevented from decreasing.

From this viewpoint, as in the present embodiment, in a configuration in which the power generation system 2 includes a plurality of fuel cell power generators FCG (the fuel cell cogeneration devices 22 in the present embodiment), it is desirable that the processing portion 1a sets the outputs of the respective fuel cell power generators FCG to be uniform.

The integrated controller 23 controls the operation of each fuel cell cogeneration device 22 on the basis of an operation instruction output from the processing portion 1a. Thus, the operation (power generation) of each fuel cell cogeneration device 22 is performed. The control device 21c stops the operation of the engine power generator 21 based on an operation instruction output from the processing portion 1a. Thus, the operation (power generation) of the engine power generator 21 is stopped. That is, when the required output 2a is equal to or less than the first predetermined value X1, the processing portion 1a operates one (in the present embodiment, the fuel cell power generator FCG) of the engine power generator 21 and the fuel cell power generator FCG (in the present embodiment, the fuel cell cogeneration device 22).

When the required output 2a is between the first predetermined value X1 and the second predetermined value X2, the processing portion 1a outputs an instruction to stop the engine power generator 21 to the control device 21c, and outputs an instruction to stop each fuel cell cogeneration device 22 to the integrated controller 23.

In the present embodiment, the second predetermined value X2 is set to the same value as the lower limit output of the engine power generator 21 and is stored in the storage portion 1b. That is, the engine power generator 21 cannot be operated at an output lower than the second predetermined value X2. However, the setting of the second predetermined value X2 is not limited to the above. In the present embodiment, the lower limit output of the engine power generator 21 is larger than the sum of the rated outputs of the respective fuel cell cogeneration devices 22. Therefore, the second predetermined value X2 is larger than the first predetermined value X1.

Based on the operation instruction output from the processing portion 1a, the control device 21c stops the operation of the engine power generator 21, and the integrated controller 23 stops the operation of each fuel cell cogeneration device 22. Thus, both of the operation of the engine power generator 21 and the operation of each fuel cell cogeneration device 22 are stopped. That is, the processing portion 1a stops the operation of the power generation system 2 when the required output 2a is between the first predetermined value X1 and the second predetermined value X2.

When the power generation system 2 is grid-connected to the commercial power system 101 (see FIG. 1) and it is difficult to cover the demand power of the load 102 (see FIG. 1) only with the power generated by the power generation system 2, the demand power of the load 102 is covered with the commercial power of the commercial power system 101. In the present embodiment, as described above, the engine power generator 21 cannot be operated at an output less than the second predetermined value X2, and the first predetermined value X1 is set to the same value as the sum of the rated outputs of the respective fuel cell cogeneration devices 22. Therefore, when the required output 2a is between the first predetermined value X1 and the second predetermined value X2, it is difficult to cover the demanded power of the load 102 only with the power generated by the power generation system 2. When the operation of the power generation system 2 is stopped, the deterioration of the power generation system 2 is less likely to progress. That is, the following configuration is desirable from the viewpoint of suppressing the deterioration of the power generation system 2 while reliably covering the demand power of the load 102. That is, as in the present embodiment, it is desirable that the power generation system 2 is grid-connected to the commercial power system 101, and the processing portion 1a stops the operation of the power generation system 2 when the required output 2a is between the first predetermined value X1 and the second predetermined value X2.

However, the present invention is not limited to the configuration in which the processing portion 1a stops the operation of the power generation system 2 when the required output 2a is between the first predetermined value X1 and the second predetermined value X2. For example, when the required output 2a is between the first predetermined value X1 and the second predetermined value X2, the processing portion 1a may operate the power generation system 2. Thus, a part of the demand power of the load 102 is covered with the output of the power generation system 2.

When the required output 2a is equal to or more than the second predetermined value X2, the processing portion 1a outputs an instruction to operate the engine power generator 21 to the control device 21c, and outputs an instruction to operate each fuel cell cogeneration device 22 to the integrated controller 23. The control device 21c controls the operation of the engine power generator 21 on the basis of an operation instruction output from the processing portion 1a. Thus, the operation (power generation) of the engine power generator 21 is performed. That is, when the required output 2a is equal to or more than the second predetermined value X2, the processing portion 1a operates the other (the engine power generator 21 in the present embodiment) of the engine power generator 21 and the fuel cell power generator FCG (the fuel cell cogeneration device 22 in the present embodiment).

As in the case where the required output 2a is equal to or less than the first predetermined value X1, the integrated controller 23 controls the operation of each fuel cell cogeneration device 22 on the basis of an operation instruction output from the processing portion 1a, whereby the operation of each fuel cell cogeneration device 22 is performed. That is, when the required output 2a is equal to or more than the second predetermined value X2, the processing portion 1a operates one (the fuel cell power generator FCG in the present embodiment) of the engine power generator 21 and the fuel cell power generator FCG (the fuel cell cogeneration device 22 in the present embodiment).

With the above configuration, in a predetermined case such as a case where the required output 2a is equal to or less than the first predetermined value X1 or equal to or more than the second predetermined value X2, the operation of one (in the present embodiment, the fuel cell power generator FCG) of the engine power generator 21 and the fuel cell power generator FCG can be performed. The fuel cell power generator FCG has higher power generation efficiency and lower maintenance efficiency (a shorter maintenance interval) than the engine power generator 21. Therefore, when the request for the power generation system 2 is the power generation efficiency rather than the maintenance efficiency, a suitable operation of the power generation system 2 can be realized. On the other hand, when one of the engine power generator 21 and the fuel cell power generator FCG is the engine power generator 21, the engine power generator 21 can be operated. In this case, it is possible to realize a suitable operation of the power generation system 2 when the request for the power generation system 2 is the maintenance efficiency rather than the power generation efficiency.

Therefore, even when either the maintenance efficiency or the power generation efficiency is requested for the power generation system 2, the operation of the power generation system 2 suitable for the request for the power generation system 2 can be realized. That is, even when the request for the power generation system 2 is changed, the power generation system 2 is prevented from becoming inconvenient, and the convenience of the power generation system 2 can be ensured. Thus, in a predetermined case, it is possible to ensure the convenience of the power generation system 2 by causing the power generation system 2 to perform an operation suitable for a request for the power generation system 2.

When the operation of the power generation system 2 is biased to either the engine power generator 21 or the fuel cell cogeneration device 22, the progress of deterioration of the engine power generator 21 and the progress of deterioration of the fuel cell cogeneration device 22 are likely to vary. When the above-described variation occurs, the maintenance work of the engine power generator 21 and the maintenance work of the fuel cell cogeneration device 22 are separately performed, and the efficiency of the maintenance work in the power generation system 2 decreases.

Therefore, it is desirable to avoid the operation of the power generation system 2 from being biased to either the engine power generator 21 or the fuel cell cogeneration device 22. Specifically, for example, it is desirable to selectively use the engine power generator 21 and the fuel cell cogeneration device 22 in a case where the required output 2a is relatively small and a case where the required output 2a is relatively large such as a case where the required output 2a is equal to or more than the second predetermined value X2. From this viewpoint, as in the present embodiment, when the required output 2a is equal to or more than the second predetermined value X2, it is desirable that the processing portion 1a operates the other (the engine power generator 21 in the present embodiment) of the engine power generator 21 and the fuel cell power generator FCG.

The following configuration is desirable from the viewpoint of causing the power generation system 2 to perform an operation suitable for a request for the power generation system 2 even when the required output 2a is relatively large. That is, as in the present embodiment, when the required output 2a is equal to or more than the second predetermined value X2, it is desirable that the processing portion 1a operates one (the fuel cell power generator FCG in the present embodiment) of the engine power generator 21 and the fuel cell power generator FCG.

The instruction set by the processing portion 1a when the required output 2a is equal to or more than the second predetermined value X2 is described in more detail below. That is, when the required output 2a is equal to or more than the second predetermined value X2 and the required output 2a is equal to or less than the third predetermined value X3, the processing portion 1a sets the output of the engine power generator 21 to the second predetermined value X2. The processing portion 1a sets the output of each fuel cell cogeneration device 22 to a value obtained by dividing the difference between the required output 2a and the second predetermined value X2 by the number of fuel cell cogeneration devices 22 (two in the present embodiment).

In the present embodiment, the third predetermined value X3 is set to a value obtained by adding the second predetermined value X2 to the first predetermined value X1, and is stored in the storage portion 1b. That is, the third predetermined value X3 is larger than the second predetermined value X2. However, the setting of the third predetermined value X3 is not limited to the above.

Therefore, in this case, the processing portion 1a sets the output of the other (the engine power generator 21 in the present embodiment) of the engine power generator 21 and the fuel cell power generator FCG to the second predetermined value X2. The processing portion 1a sets the output of one (the fuel cell power generator FCG in the present embodiment) of the engine power generator 21 and the fuel cell power generator FCG to the difference between the required output 2a and the second predetermined value X2.

When the required output 2a is larger than the third predetermined value X3, the processing portion 1a sets the output of each fuel cell cogeneration device 22 to the first predetermined value X1. The processing portion 1a sets the output of the engine power generator 21 to the difference between the required output 2a and the first predetermined value X1. That is, when the required output 2a is larger than the third predetermined value X3, the processing portion 1a sets the output of one (the fuel cell power generator FCG in the present embodiment) of the engine power generator 21 and the fuel cell power generator FCG to the first predetermined value X1. The processing portion 1a sets the output of the other (the engine power generator 21 in the present embodiment) of the engine power generator 21 and the fuel cell power generator FCG to the difference between the required output 2a and the first predetermined value X1.

As described above, the first predetermined value X1 is set to the same value as the sum of the rated outputs of the respective fuel cell cogeneration devices 22. Thus, the sum of the outputs of the respective fuel cell cogeneration devices 22 is equal to or less than the first predetermined value X1. The second predetermined value X2 is set to the same value as the lower limit output of the engine power generator 21. Therefore, the output of the engine power generator 21 becomes equal to or more than the second predetermined value X2. That is, the output of one (the fuel cell power generator FCG in the present embodiment) of the engine power generator 21 and the fuel cell power generator FCG is limited to the first predetermined value X1 or less. The output of the other (the engine power generator 21 in the present embodiment) of the engine power generator 21 and the fuel cell power generator FCG is limited to the second predetermined value X2 or more.

Even with such a configuration, the following configuration is desirable from the viewpoint of preferentially operating one of the engine power generator 21 and the fuel cell power generator FCG while covering the required output 2a equal to or more than the second predetermined value X2 with the output of the power generation system 2. That is, as in the present embodiment, when the required output 2a is equal to or more than the second predetermined value X2 and equal to or less than the third predetermined value X3 (the sum of the first predetermined value X1 and the second predetermined value X2), the processing portion 1a desirably performs the following settings. That is, it is desirable that the processing portion 1a sets the output of the other (the engine power generator 21 in the present embodiment) of the engine power generator 21 and the fuel cell power generator FCG to the second predetermined value X2. The processing portion 1a desirably sets the output of one (the fuel cell power generator FCG in the present embodiment) of the engine power generator 21 and the fuel cell power generator FCG to the difference between the required output 2a and the second predetermined value X2.

When the required output 2a is larger than the third predetermined value X3, the processing portion 1a desirably performs the following setting. That is, it is desirable that the processing portion 1a sets the output of one (the fuel cell power generator FCG in the present embodiment) of the engine power generator 21 and the fuel cell power generator FCG to the first predetermined value X1. Further, it is desirable that the processing portion 1a sets the output of the other (the engine power generator 21 in the present embodiment) of the engine power generator 21 and the fuel cell power generator FCG to the difference between the required output 2a and the first predetermined value X1.

### [3. Modification Example of Operation Pattern]

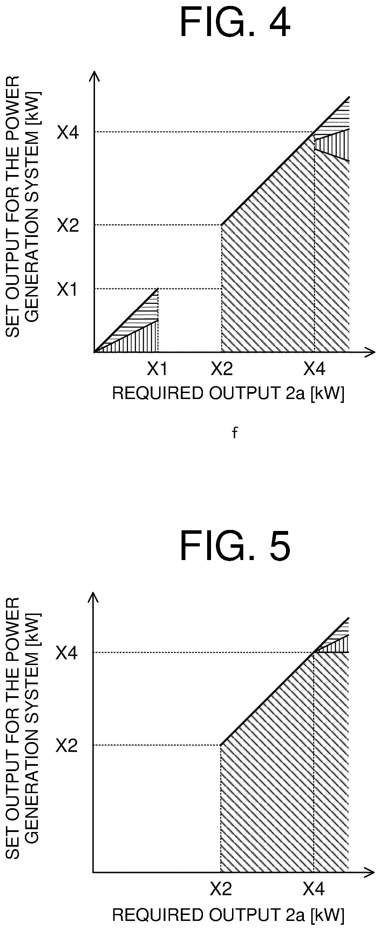

A modification example of the operation pattern will be described with reference to FIG. 4. FIG. 4 is an explanatory diagram illustrating a modification example of the operation pattern. FIG. 4 illustrates allocation of the set output (power generation output) in the power generation system 2 with respect to the required output 2a for the power generation system 2 in the modification example. The allocation of the set outputs in the power generation system 2 illustrated in FIG. 4 is the same as the allocation of the set outputs in the power generation system 2 illustrated in FIG. 3 except that the allocation in a case where the required output 2a is equal to or more than the second predetermined value X2 is different. Thus, these different points will be mainly explained in the following, and the same points will not be described. The same elements and the like as those in FIG. 3 are denoted by the same reference numerals.

When the required output 2a is equal to or more than the second predetermined value X2 and less than the fourth predetermined value X4, the processing portion 1a outputs an instruction to operate the engine power generator 21 to the control device 21c, and outputs an instruction to stop each fuel cell cogeneration device 22 to the integrated controller 23.

In the present embodiment, the fourth predetermined value X4 is set to the same value as the rated output of the engine power generator 21 and is stored in the storage portion 1b. However, the setting of the fourth predetermined value X4 is not limited to the above. As described above, the second predetermined value X2 is set to the same value as the lower limit output of the engine power generator 21. Therefore, the fourth predetermined value X4 is larger than the second predetermined value X2.

The control device 21c controls the operation of the engine power generator 21 on the basis of an operation instruction output from the processing portion 1a, whereby the operation of the engine power generator 21 is performed. The integrated controller 23 stops the operation of each fuel cell cogeneration device 22 on the basis of an operation instruction output from the processing portion 1a.

When the required output 2a is equal to or more than the fourth predetermined value X4, the processing portion 1a outputs an instruction to operate the engine power generator 21 to the control device 21c, and outputs an instruction to operate each fuel cell cogeneration device 22 to the integrated controller 23. The control device 21c controls the operation of the engine power generator 21 on the basis of an operation instruction output from the processing portion 1a, whereby the operation of the engine power generator 21 is performed. The integrated controller 23 controls the operation of each fuel cell cogeneration device 22 on the basis of an operation instruction output from the processing portion 1a, whereby the operation of each fuel cell cogeneration device 22 is performed. Therefore, when the required output 2a is equal to or more than the fourth predetermined value X4, the processing portion 1a operates one (the fuel cell power generator FCG in the present embodiment) of the engine power generator 21 and the fuel cell power generator FCG.

As described above, the fourth predetermined value X4 is set to the same value as the rated output of the engine power generator 21. Thus, the output of the engine power generator 21 becomes equal to or less than the fourth predetermined value X4. That is, the output of the other (the engine power generator 21 in the modification example) of the engine power generator 21 and the fuel cell power generator FCG is limited to the fourth predetermined value X4 or less. Even with this configuration, the following configuration is desirable from the viewpoint of covering the required output 2a equal to or more than the fourth predetermined value X4 with the output of the power generation system 2. That is, as in the modification example, when the required output 2a is equal to or more than the fourth predetermined value X4, it is desirable that the processing portion 1a operates one (the fuel cell power generator FCG in the modification example) of the engine power generator 21 and the fuel cell power generator FCG.

The instruction set by the processing portion 1a when the required output 2a is equal to or more than the fourth predetermined value X4 is described in more detail below. That is, the processing portion 1a sets the output of the engine power generator 21 to be decreased as the required output 2a increases. The processing portion 1a sets the outputs of the respective fuel cell cogeneration devices 22 to be increased as the required outputs 2a increase.

Therefore, when the required output 2a is equal to or more than the fourth predetermined value X4, the processing portion 1a increases the output of one (the fuel cell power generator FCG in the modification example) of the engine power generator 21 and the fuel cell power generator FCG as the required output 2a increases. Further, when the required output 2a is equal to or more than the fourth predetermined value X4, the processing portion 1a decreases the output of the other (the engine power generator 21 in the modification example) of the engine power generator 21 and the fuel cell power generator FCG as the required output 2a increases.

As described above, the output of the other (the engine power generator 21 in the modification example) of the engine power generator 21 and the fuel cell power generator FCG is limited to the fourth predetermined value X4 or less. Even with this configuration, the following configuration is desirable from the viewpoint of preferentially operating one of the engine power generator 21 and the fuel cell power generator FCG while covering the required output 2a equal to or more than the fourth predetermined value X4 with the output of the power generation system 2. That is, as in the modification example, when the required output 2a is equal to or more than the fourth predetermined value X4, it is desirable that the processing portion 1a increases the output of one (the fuel cell power generator FCG in the modification example) of the engine power generator 21 and the fuel cell power generator FCG as the required output 2a increases. Further, when the required output 2a is equal to or more than the fourth predetermined value X4, it is desirable that the processing portion 1a decreases the output of the other (the engine power generator 21 in the modification example) of the engine power generator 21 and the fuel cell power generator FCG as the required output 2a increases.

Another modification example of the operation pattern will be described with reference to FIG. 5. FIG. 5 is an explanatory diagram illustrating another modification example of the operation pattern. FIG. 5 illustrates allocation of the set output (power generation output) in the power generation system 2 with respect to the required output 2a for the power generation system 2 in another modification example. The allocation of the set outputs in the power generation system 2 illustrated in FIG. 5 is the same as the allocation of the set outputs in the power generation system 2 illustrated in FIG. 4 except that the allocation in the case where the required output 2a is equal to or less than the first predetermined value X1 and the allocation in the case where the required output 2a is equal to or more than the fourth predetermined value X4 are different. That is, particularly when the required output 2a is equal to or more than the second predetermined value X2, the processing portion 1a operates one (the fuel cell power generator FCG in another modification example) of the engine power generator 21 and the fuel cell power generator FCG. Thus, these different points will be mainly explained in the following, and the same points will not be described. The same elements and the like as those in FIG. 3 or FIG. 4 are denoted by the same reference numerals.

When the required output 2a is equal to or less than the first predetermined value X1, the processing portion 1a outputs an instruction to stop the engine power generator 21 to the control device 21c, and outputs an instruction to stop each fuel cell cogeneration device 22 to the integrated controller 23. Based on the operation instruction output from the processing portion 1a, the control device 21c stops the operation of the engine power generator 21, and the integrated controller 23 stops the operation of each fuel cell cogeneration device 22. Thus, both of the operation of the engine power generator 21 and the operation of each fuel cell cogeneration device 22 are stopped.

Even in another modification example, when the required output 2a is between the first predetermined value X1 and the second predetermined value X2, the processing portion 1a stops both of the operation of the engine power generator 21 and the operation of each the fuel cell cogeneration device 22. That is, when the required output 2a is equal to or less than the second predetermined value X2, the processing portion 1a of another modification example stops the operation of the power generation system 2.

In the configuration in which the power generation system 2 is grid-connected with the commercial power system 101 (see FIG. 1), the following configuration is desirable from the viewpoint of suppressing deterioration of the power generation system 2 while reliably covering the demand power of the load 102 (see FIG. 1). That is, as in another modification example, when the required output 2a is equal to or less than the second predetermined value X2, it is desirable that the processing portion 1a stops the operation of the power generation system 2.

When the required output 2a is equal to or more than the fourth predetermined value X4, the processing portion 1a outputs an instruction to operate the engine power generator 21 to the control device 21c, and outputs an instruction to operate each fuel cell cogeneration device 22 to the integrated controller 23. The control device 21c controls the operation of the engine power generator 21 on the basis of an operation instruction output from the processing portion 1a, whereby the operation of the engine power generator 21 is performed. The integrated controller 23 controls the operation of each fuel cell cogeneration device 22 on the basis of an operation instruction output from the processing portion 1a, whereby the operation of each fuel cell cogeneration device 22 is performed. That is, when the required output 2a is equal to or more than a fourth predetermined value X4 that is larger than the second predetermined value X2, the processing portion 1a operates the other (the engine power generator 21 in another modification example) of the engine power generator 21 and the fuel cell power generator FCG. Further, when the required output 2a is equal to or more than the fourth predetermined value X4, the processing portion 1a operates one (the fuel cell power generator FCG in another modification example) of the engine power generator 21 and the fuel cell power generator FCG.

In a configuration in which one of the engine power generator 21 and the fuel cell power generator FCG is operated when the required output 2a is equal to or more than the second predetermined value X2, the following configuration is desirable from the viewpoint of reliably covering a relatively large required output 2a with the output of the power generation system 2. That is, as in another modification example, when the required output 2a is equal to or more than a fourth predetermined value X4 that is larger than the second predetermined value X2, it is desirable that the processing portion 1a operates the other (the engine power generator 21 in another modification example) of the engine power generator 21 and the fuel cell power generator FCG.

Even in a configuration in which the output of the other (the engine power generator 21 in the modification example) of the engine power generator 21 and the fuel cell power generator FCG is limited to the fourth predetermined value X4 or less, it is desirable to cover the required output 2a equal to or more than the fourth predetermined value X4 with the output of the power generation system 2. From this viewpoint, as in another modification example, when the required output 2a is equal to or more than the fourth predetermined value X4, it is desirable that the processing portion 1a operates one (the fuel cell power generator FCG in the modification example) of the engine power generator 21 and the fuel cell power generator FCG.

The instruction set by the processing portion 1a when the required output 2a is equal to or more than the fourth predetermined value X4 is described in more detail below. That is, when the required output 2a is equal to or more than the fourth predetermined value X4, the processing portion 1a sets the output of the engine power generator 21 to the fourth predetermined value X4. The processing portion 1a sets the output of each fuel cell cogeneration device 22 to a value obtained by dividing the difference between the required output 2a and the fourth predetermined value X4 by the number of fuel cell cogeneration devices 22 (two in the present embodiment).

Therefore, in this case, the processing portion 1a sets the output of the other (the engine power generator 21 in another modification example) of the engine power generator 21 and the fuel cell power generator FCG to the fourth predetermined value X4. The processing portion 1a sets the output of one (the fuel cell power generator FCG in another modification example) of the engine power generator 21 and the fuel cell power generator FCG to the difference between the required output 2a and the fourth predetermined value X4.

Even in the configuration in which the output of the other of the engine power generator 21 and the fuel cell power generator FCG is limited to the fourth predetermined value X4 or less, the following configuration is desirable from the viewpoint of reliably realizing a configuration in which the required output 2a equal to or more than the fourth predetermined value X4 is covered with the output of the power generation system 2. That is, when the required output 2a is equal to or more than the fourth predetermined value X4, it is desirable that the processing portion 1a sets the output of the other of the engine power generator 21 and the fuel cell power generator FCG to the fourth predetermined value X4. Further, when the required output 2a is equal to or more than the fourth predetermined value X4, it is desirable that the processing portion 1a sets the output of one of the engine power generator 21 and the fuel cell power generator FCG to the deference between the required output 2a and the fourth predetermined value X4.

### [4. Supplementary Description]

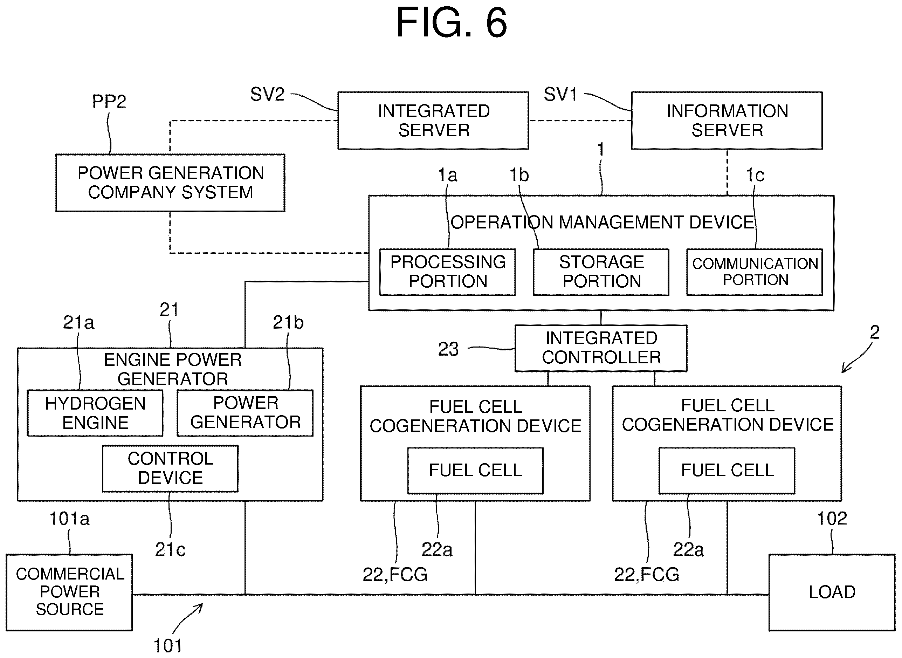

In the present embodiment, a configuration in which the operation plan of the power generation system 2 is input to the operation management device 1 by the power generation company (specifically, the operator of the power generation company) via the communication terminal device PP1 of the power generation company has been described (see FIG. 1), but the present invention is not limited thereto. For example, the operation plan of the power generation system 2 may be input to the operation management device 1 by a power generation company system PP2. More details are as follows. FIG. 6 is an explanatory diagram illustrating a modification example of the connection between the operation management device 1 and a power generation company system PP2. The block diagram illustrated in FIG. 6 is the same as the block diagram illustrated in FIG. 1 except that the communication terminal device PP1 is removed and the operation management device 1 and the power generation company system PP2 are directly and communicably connected with each other. The communication between the operation management device 1 and the power generation company system PP2 may be performed by, for example, Modbus communication, BACnet communication, or the like.

With this configuration, the acquisition of the operation plan of the power generation system 2 in the processing portion 1a illustrated in step S1 of FIG. 2 is realized by the operation plan of the power generation system 2 being output from the power generation company system PP2 to the operation management device 1. Thus, at least the work of manipulating the communication terminal device PP1 is omitted, and the work efficiency of the power generation company is improved.

In the present embodiment, the cogeneration device having a waste heat recovery (utilization) function has been described as an example of the fuel cell power generator FCG, but the fuel cell power generator FCG is not limited to the cogeneration device. For example, the fuel cell power generator FCG may be a monogeneration device that does not have the waste heat recovery function and simply has the power generation function.

In the present embodiment, the operation pattern of the power generation system 2 based on the power generation efficiency of each fuel cell cogeneration device 22 has been described, but the present invention is not limited thereto. For example, the operation pattern of the power generation system 2 may be based on the overall efficiency including the effect of waste heat recovery of each fuel cell cogeneration device 22. When the power generation system 2 includes a hydrogen engine cogeneration device, the operation pattern of the power generation system 2 may be based on the overall efficiency including the effect of waste heat recovery of the hydrogen engine cogeneration device.

### 5. Supplementary Notes

The operation management device 1 described in the present embodiment can also be expressed as an operation management device described in the following Supplementary Notes.

An operation management device according to Supplementary Note (1) is
an operation management device that manages an operation of a power generation system comprising an engine power generator and a fuel cell power generator, the operation management device comprising:
a processing portion that operates one of the engine power generator and the fuel cell power generator when a required output of the power generation system is equal to or less than a first predetermined value.

An operation management device according to Supplementary Note (2) is the operation management device according to Supplementary Note (1), wherein when the required output is equal to or more than a second predetermined value that is greater than the first predetermined value, the processing portion operates the other of the engine power generator and the fuel cell power generator.

An operation management device according to Supplementary Note (3) is
the operation management device according to Supplementary Note (2), wherein when the required output is equal to or more than the second predetermined value, the processing portion operates the one of the engine power generator and the fuel cell power generator.

An operation management device according to Supplementary Note (4) is
the operation management device according to Supplementary Note (3), wherein when the required output is equal to or more than the second predetermined value and equal to or less than a third predetermined value that is more than the second predetermined value,
the processing portion sets an output of the other of the engine power generator and the fuel cell power generator to the second predetermined value, and
sets an output of the one of the engine power generator and the fuel cell power generator to a difference between the required output and the second predetermined value.

An operation management device according to Supplementary Note (5) is
the operation management device according to Supplementary Note (4), wherein when the required output is more than the third predetermined value,
the processing portion sets an output of the one of the engine power generator and the fuel cell power generator to the first predetermined value, and
sets an output of the other of the engine power generator and the fuel cell power generator to a difference between the required output and the first predetermined value.

An operation management device according to Supplementary Note (6) is
the operation management device according to any one of Supplementary Notes (2) to (5), wherein
the power generation system is grid-connected to a commercial power system and
when the required output is between the first predetermined value and the second predetermined value, the processing portion stops the operation of the power generation system.

An operation management device according to Supplementary Note (7) is
an operation management device that manages an operation of a power generation system comprising an engine power generator and a fuel cell power generator, the operation management device comprising:
a processing portion that operates one of the engine power generator and the fuel cell power generator when a required output of the power generation system is equal to or more than a second predetermined value.

An operation management device according to Supplementary Note (8) is
the operation management device according to Supplementary Note (7), wherein
the power generation system is grid-connected to a commercial power system and
when the required output is equal to or less than the second predetermined value, the processing portion stops the operation of the power generation system.

An operation management device according to Supplementary Note (9) is
the operation management device according to Supplementary Note (7) or (8), wherein when the required output is equal to or more than a fourth predetermined value that is greater than the second predetermined value, the processing portion operates the other of the engine power generator and the fuel cell power generator.

An operation management device according to Supplementary Note (10) is
the operation management device according to Supplementary Note (9), wherein when the required output is equal to or more than the fourth predetermined value, the processing portion operates the one of the engine power generator and the fuel cell power generator.

An operation management device according to Supplementary Note (11) is
the operation management device according to Supplementary Note (2), wherein when the required output is equal to or more than a fourth predetermined value that is greater than the second predetermined value, the processing portion operates the one of the engine power generator and the fuel cell power generator.

An operation management device according to Supplementary Note (12) is
the operation management device according to Supplementary Note (10) or (11), wherein when the required output is equal to or more than the fourth predetermined value,
the processing portion sets an output of the other of the engine power generator and the fuel cell power generator to the fourth predetermined value, and
sets an output of the one of the engine power generator and the fuel cell power generator to a difference between the required output and the fourth predetermined value.

An operation management device according to Supplementary Note (13) is
the operation management device according to Supplementary Note (10) or (11), wherein when the required output is equal to or more than the fourth predetermined value, and as the required output increases,
the processing portion increases an output of the one of the engine power generator and the fuel cell power generator, and
decreases an output of the other of the engine power generator and the fuel cell power generator.

An operation management device according to Supplementary Note (14) is
the operation management device according to any one of Supplementary Notes (1) to (13), wherein the fuel cell power generator includes a fuel cell cogeneration device capable of recovering waste heat associated with power generation.

An operation management device according to Supplementary Note (15) is
the operation management device according to any one of Supplementary Note (1) to (14), wherein
the power generation system comprises a plurality of the fuel cell power generators, and
the processing portion uniformly sets outputs of the respective fuel cell power generators.

Although the embodiment of the present invention has been described above, the scope of the present invention is not limited thereto, and the present invention can be implemented by expanding or changing it without departing from the gist of the invention. In addition, the plurality of embodiments and modification examples described in this specification may be embodied in combinations within a range to the extent possible.

### INDUSTRIAL APPLICABILITY

The present invention is applicable to, for example, an operation management device of an industrial or domestic power generation system.

### REFERENCE SIGNS LIST

1 operation management device
1a processing portion
2 power generation system
2a required output
21 engine power generator
22 fuel cell cogeneration device
101 commercial power system
FCG fuel cell power generator
X1 first predetermined value
X2 second predetermined value
X3 third predetermined value
X4 fourth predetermined value

## Claims

1. An operation management device that manages an operation of a power generation system comprising an engine power generator and a fuel cell power generator, the operation management device comprising:
a processing portion that operates one of the engine power generator and the fuel cell power generator when a required output of the power generation system is equal to or less than a first predetermined value.

2. The operation management device according to claim 1, wherein when the required output is equal to or more than a second predetermined value that is greater than the first predetermined value, the processing portion operates the other of the engine power generator and the fuel cell power generator.

3. The operation management device according to claim 2, wherein when the required output is equal to or more than the second predetermined value, the processing portion operates the one of the engine power generator and the fuel cell power generator.

4. The operation management device according to claim 3, wherein when the required output is equal to or more than the second predetermined value and equal to or less than a third predetermined value that is more than the second predetermined value,
the processing portion sets an output of the other of the engine power generator and the fuel cell power generator to the second predetermined value, and
sets an output of the one of the engine power generator and the fuel cell power generator to a difference between the required output and the second predetermined value.

5. The operation management device according to claim 4, wherein when the required output is more than the third predetermined value,
the processing portion sets an output of the one of the engine power generator and the fuel cell power generator to the first predetermined value, and
sets an output of the other of the engine power generator and the fuel cell power generator to a difference between the required output and the first predetermined value.

6. The operation management device according to claim 2, wherein
the power generation system is grid-connected to a commercial power system and
when the required output is between the first predetermined value and the second predetermined value, the processing portion stops the operation of the power generation system.

7. An operation management device that manages an operation of a power generation system comprising an engine power generator and a fuel cell power generator, the operation management device comprising:
a processing portion that operates one of the engine power generator and the fuel cell power generator when a required output of the power generation system is equal to or more than a second predetermined value.

8. The operation management device according to claim 7, wherein
the power generation system is grid-connected to a commercial power system and
when the required output is equal to or less than the second predetermined value, the processing portion stops the operation of the power generation system.

9. The operation management device according to claim 7, wherein when the required output is equal to or more than a fourth predetermined value that is greater than the second predetermined value, the processing portion operates the other of the engine power generator and the fuel cell power generator.

10. The operation management device according to claim 9, wherein when the required output is equal to or more than the fourth predetermined value, the processing portion operates the one of the engine power generator and the fuel cell power generator.

11. The operation management device according to claim 2, wherein when the required output is equal to or more than a fourth predetermined value that is greater than the second predetermined value, the processing portion operates the one of the engine power generator and the fuel cell power generator.

12. The operation management device according to claim 10, wherein when the required output is equal to or more than the fourth predetermined value,
the processing portion sets an output of the other of the engine power generator and the fuel cell power generator to the fourth predetermined value, and
sets an output of the one of the engine power generator and the fuel cell power generator to a difference between the required output and the fourth predetermined value.

13. The operation management device according to claim 10, wherein when the required output is equal to or more than the fourth predetermined value, and as the required output increases,
the processing portion increases an output of the one of the engine power generator and the fuel cell power generator, and
decreases an output of the other of the engine power generator and the fuel cell power generator.

14. The operation management device according to claim 1, wherein the fuel cell power generator includes a fuel cell cogeneration device capable of recovering waste heat associated with power generation.

15. The operation management device according to any one of claims 1 to 14, wherein
the power generation system comprises a plurality of the fuel cell power generators, and
the processing portion uniformly sets outputs of the respective fuel cell power generators.
